# EUROPEAN PATENT SPECIFICATION

(11) **EP 3 438 777 B1**
(45) Date of publication and mention of the grant of the patent: **11.05.2022**
(21) Application number: 17184872.4
(22) Date of filing: 04.08.2017
(51) Int. Cl.: G01S 17/86

(54) **METHOD, APPARATUS AND COMPUTER PROGRAM FOR A VEHICLE**
VERFAHREN, VORRICHTUNG UND COMPUTERPROGRAMM FÜR EIN FAHRZEUG
PROCÉDÉ, APPAREIL ET PROGRAMME INFORMATIQUE POUR VÉHICULE

(43) Date of publication of application: 06.02.2019
(73) Proprietor: Bayerische Motoren Werke Aktiengesellschaft, 80809 München (DE)
(72) Inventor: Banerjee, Koyel, San Jose, CA 95126 (US); Baukus, Kai, 80686 München (DE); Notz, Dominik, 65843 Sulzbach (DE); Windelen, Johannes, 76227 Karlsruhe (DE)

(56) References cited:
- GB-A- 2 507 560
- US-A1- 2017 061 632
- STANLEY BILESCHI: "Fully automatic calibration of LIDAR and video streams from a vehicle", 2009 IEEE 12TH INTERNATIONAL CONFERENCE ON COMPUTER VISION WORKSHOPS, ICCV WORKSHOPS : KYOTO, JAPAN, 27 SEPTEMBER - 4 OCTOBER 2009, INSTITUTE OF ELECTRICAL AND ELECTRONICS ENGINEERS, PISCATAWAY, NJ, 27 September 2009 (2009-09-27), pages 1457-1464, XP031664469, ISBN: 978-1-4244-4442-7
- SCHNEIDER NICK ET AL: "RegNet: Multimodal sensor registration using deep neural networks", 2017 IEEE INTELLIGENT VEHICLES SYMPOSIUM (IV), IEEE, 11 June 2017 (2017-06-11), pages 1803-1810, XP033133946, DOI: 10.1109/IVS.2017.7995968 [retrieved on 2017-07-28]

## Description

### Field

Examples relate to a method, an apparatus and a computer program for a vehicle and to a vehicle, more specifically, but not exclusively, to determining a combined image of lidar sensor data and camera sensor data.

### Background

Autonomous driving and assisted driving are two major topics of automotive research. A major prerequisite of both may be to sense the surroundings of the vehicle, to enable a recognition of objects and other drivers. One approach may be to sense a distance of objects surrounding the vehicle using a Lidar sensor.

Stanley Bileschi: "Fully automatic calibration of LIDAR and video streams from a vehicle" shows an approach, in which LIDAR data and a video stream of a vehicle are automatically aligned based on a matching of contours between the LIDAR data and the video stream.

Schneider Nick Et Al: "RegNet: Multimodal sensor registration using deep neural networks" shows an approach, in which an extrinsic calibration between multimodal sensors, e.g. a scanning LIDAR and a monocular camera, are performed.

UK patent application GB 2507560 A discloses an extrinsic calibration of imaging sensing devices and 2D LIDARs mounted on a transportable apparatus.

### Summary

There may be a demand to provide an improved concept for detecting objects in a vicinity of a vehicle, which may enable a more precise determination of a location of these objects.

Such a demand may be satisfied by the subject matter of the claims.

Embodiments relate to a method, an apparatus and a computer program for a vehicle and to a vehicle. The method may combine lidar sensor data (of a lidar sensor) and camera sensor data (of a camera) to determine a combined image comprising both distance information (of the lidar sensor data) and color information (of the camera sensor data). To create a more precise overlay of the distance information and of the color information, edges within the color information and intensity discontinuities within the distance information are overlaid to match the lidar sensor data to the camera sensor data, e.g. to enable a combined processing of the camera sensor data and of the lidar sensor data.

Embodiments provide a method for a vehicle. The method comprises obtaining camera sensor data of a camera of the vehicle. The method further comprises obtaining lidar sensor data of a lidar sensor of the vehicle. The method further comprises determining information related to one or more edges within the camera sensor data and information related to one or more intensity discontinuities within the lidar sensor data. The method further comprises determining a combined image of the camera sensor data and the lidar sensor data based on the information related the one or more edges and based on the information related to the one or more intensity discontinuities.

Matching the edges and the intensity discontinuities may enable a mapping of distance/depth/intensity values to pixels of image frames of the camera sensor data, and may enable a determination of the combined image with an improved precision of an overlay of the distance information and the color information.

In various embodiments, the method may further comprise transforming a point cloud of the lidar sensor data based on the information related the one or more edges and based on the information related to the one or more intensity discontinuities. The determining of the combined image may be based on the transformed point cloud. Transforming the point cloud (e.g. scaling, shifting or translating the point cloud) may enable a mapping of distance/depth/intensity values to pixels of image frames of the camera sensor data.

In at least some embodiments, the determining of the information related to the one or more edges within the camera sensor data and the information related to the one or more intensity discontinuities within the lidar sensor data may be based on a plurality of frames of the camera sensor data and based on a plurality of point clouds of the lidar sensor data. This may enable a constant re-adjustment of the (extrinsic) calibration, and might render a factory-based extrinsic calibration obsolete.

In at least some embodiments, the method further comprises determining a calibration of the camera sensor data and of the lidar sensor data based on the information related to the one or more edges and based on the information related to the one or more intensity discontinuities. The determining of the combined image may be based on the calibration of the camera sensor data and of the lidar sensor data. The calibration may indicate at least one transformation parameter (e.g. first and second transformation parameters) for overlaying the lidar sensor data and the camera sensor data such that outlines of an object comprised within the lidar sensor data substantially match outlines of the object comprised within the camera sensor data.

For example, the determining of the calibration may be based on reducing a mismatch of an overlay of the one or more edges within the camera sensor data and the one or more intensity discontinuities within the lidar sensor data over a plurality of frames within the camera sensor data and a plurality of point clouds within the lidar sensor data. Reducing the mismatch over a plurality of frames may enable a constant re-adjustment of the (extrinsic) calibration, and might render a factory-based extrinsic calibration obsolete.

The reducing of the mismatch comprises determining translation and rotation parameters to reduce the mismatch between the one or more edges within the camera sensor data and the one or more intensity discontinuities within the lidar sensor data. This may enable a programmatic determination of the calibration parameters.

In various embodiments, the determining of the calibration may comprise determining first transformation parameters for transforming the camera sensor data from a camera coordinate system to a common coordinate system. The determining of the calibration may comprise determining second transformation parameters for transforming the lidar sensor data from a lidar coordinate system to the common coordinate system. The combined image may be based on the common coordinate system. The common coordinate system may enable a combined processing of the combined image, e.g. using an artificial neural network.

In at least some embodiments, the determining of the calibration may be performed according to a pre-defined time-interval, based on a power cycle of the vehicle and/or based on a motion of the vehicle. As a calibration mismatch may occur while the vehicle is driving, such events may trigger a re-calibration.

In various embodiments, the determining of the information related the one or more edges and of the information related to the one or more intensity discontinuities may be performed while the vehicle is in motion. This may enable a constant re-adjustment of the (extrinsic) calibration, and might render a factory-based extrinsic calibration obsolete.

In at least some embodiments, the determining of the combined image may comprise assigning one of a distance value, a depth value and an intensity value to pixels of the combined image. The combined image may comprise distance information and color information. This may enable a subsequent processing of the combined image based on both distance information and color information.

In various embodiments, the lidar sensor data may comprise a point cloud of distance information. The determining of the combined image may comprise projecting points of the point cloud onto a camera plane of the camera sensor data. The projection may enable a mapping of distance (or depth, intensity) values to pixels of image frames of the camera sensor data.

Embodiments further provide a computer program having a program code for performing the method, when the computer program is executed on a computer, a processor, or a programmable hardware component.

Embodiments further provide an apparatus for a vehicle. The apparatus comprises at least one interface configured to communicate with a camera of the vehicle and to communicate with a lidar sensor of the vehicle. The apparatus further comprises a processing module configured to obtain camera sensor data of the camera. The processing module is further configured to obtain lidar sensor data of the lidar sensor. The processing module is further configured to determine information related to one or more edges within the camera sensor data and information related to one or more intensity discontinuities within the lidar sensor data. The processing module is further configured to determine a combined image of the camera sensor data and the lidar sensor data based on the information related the one or more edges and based on the information related to the one or more intensity discontinuities.

Embodiments further provide a vehicle comprising such an apparatus.

### Brief description of the Figures

Some examples of apparatuses and/or methods will be described in the following by way of example only, and with reference to the accompanying figures, in which
Fig. 1a shows a flow chart of a method for a vehicle;
Fig. 1b shows a block diagram of an apparatus for a vehicle;
Fig. 1c shows another flow chart of a method for a vehicle;
Figs. 2a and 2b show a schematic illustration of a sensor fusion;
Fig. 3a shows a principle of camera calibration based on a pinhole camera model;
Fig. 3b shows a principle of a calibration of a lidar sensor;
Fig. 3c shows a basic principle of mapping lidar sensor data and camera sensor data to the same coordinate system;
Figs. 3d and 3e illustrates a mapping of data between coordinate systems;
Fig. 4a shows a flow chart of a method for a combined processing of camera sensor data and lidar sensor data; and
Figs. 5a-5c illustrates example iterations of an algorithm aligning image edges and point cloud discontinuities.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

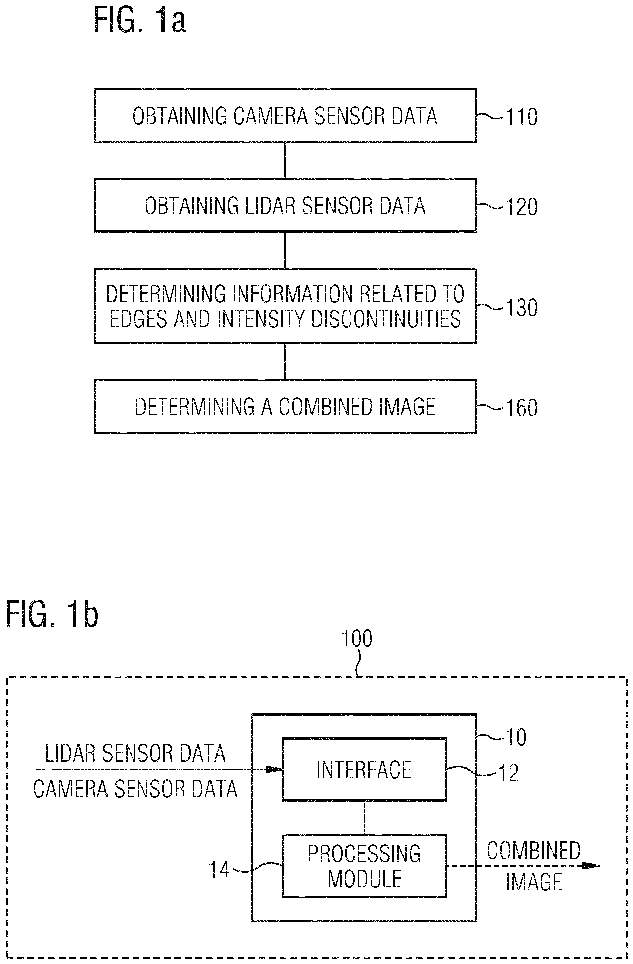

Fig. 1a illustrates a flow chart of a method for a vehicle 100. Fig. 1b illustrates a block diagram of a corresponding apparatus for the vehicle 100. The apparatus 10 comprises at least one interface 12 configured to communicate with a camera of the vehicle 100 and to communicate with a lidar sensor of the vehicle 100. The apparatus 10 further comprises a processing module 14 configured to execute the method of Fig. 1a, e.g. the method steps 110 to 170. The at least one interface 12 is coupled to the processing module 14. In various embodiments, the apparatus 10 further comprises the lidar sensor and/or the camera. Fig. 1b further illustrates a block diagram of the vehicle 100 comprising the apparatus 10. In at least some embodiments, the vehicle 100 may be one of an automobile, a motorbike, an autonomous vehicle, a semi-autonomous vehicle, a vessel, a train, a truck, a lorry or a van.

The method (of Fig. 1a) comprises obtaining 110 camera sensor data of a camera of the vehicle 100. The method further comprises obtaining 120 lidar sensor data of a lidar sensor of the vehicle 100.

In various embodiments, the camera may be one of a video camera, a high-speed camera or a still image camera. The camera sensor data may be a raw output of the camera. Alternatively, the camera sensor data may be pre-processed sensor data of the camera. For example, the camera sensor data may comprise a plurality of image frames. An image frame of the plurality of image frames may comprise a plurality of pixels, e.g. a plurality of pixels in a two-dimensional arrangement. For example, a frame rate of the camera sensor data and/or a triggering of frames within the camera sensor data may be matched to a rotation speed and/or a rotation angle of the lidar sensor. For example, the camera may comprise a camera sensor (e.g. a CMOS (Complementary Metal-Oxide-Semiconductor) sensor or a CCD (Charge-Coupled Device) and a camera lens. The camera may be configured to provide the camera sensor data to the apparatus 10. For example, the camera sensor data may comprise raw camera sensor data (e.g. a raw output of the sensor) or pre-processed camera sensor data (e.g. image information or color information). In some embodiments, the camera sensor data may comprise a stream of image frames (e.g. in a moving picture file format). Alternatively, the camera sensor data may comprise separate images (image frames). The camera sensor data may comprise image information, e.g. color information for each pixel of the image information.

Lidar (or LiDAR) is either a portmanteau of Light and Radar (Radio Detection and Ranging), or an acronym of Light Detection and Ranging or Light Imaging, Detection and Ranging. In at least some embodiments, the lidar sensor may be configured to determine the lidar sensor data based on emitting light (e.g. pulsed laser light) and measuring a portion of the light reflected from objects in a vicinity of the lidar sensor. The lidar sensor data may comprise distance information. In at least some cases, the terms depth (or depth information, depth value) and distance (or distance information, distance value) may be used interchangeably. For example, the lidar sensor data may comprise a point cloud of distance information. For example, the distance information may comprise information related to a distance of a plurality of points (e.g. of the point cloud) from the lidar sensor (distance values), information related to a depth of a space in a vicinity of the lidar sensor demarcated by objects surrounding the lidar sensor (depth values), and/or information related to an intensity of a portion of light emitted by the lidar sensor, reflected by objects in a vicinity of the lidar sensor and measured by the lidar sensor (intensity values). For example, the intensity values may indicate a distance and/or a coloring of objects reflecting the portion of the emitted light. The point cloud may comprise distance information for different vertical and/or horizontal angles around a rotation axis of the lidar sensor. For example, the lidar sensor may be configured to rotate at a pre-defined of adjustable rotation frequency. The lidar sensor data may comprise a point cloud of distance information for each rotation or for a subset of rotations of the lidar sensor. For example, a spatial resolution of the lidar sensor data may be lower than a spatial resolution of the camera sensor data.

The method further comprises determining 130 information related to one or more edges within the camera sensor data and information related to one or more intensity discontinuities (or one or more depth discontinuities/distance discontinuities, or one or more lidar sensor data edges) within the lidar sensor data. The method further comprises determining 160 a combined image of the camera sensor data and the lidar sensor data based on the information related the one or more edges and based on the information related to the one or more intensity discontinuities. Matching the edges and the intensity discontinuities may enable a mapping of distance/depth/intensity values to pixels of image frames of the camera sensor data.

For example, the determining 130 of the information related to the one or more edges may comprise detecting one or more brightness discontinuities and/or one or more color discontinuities within the camera sensor data. For example, the determining of the information related to the one or more edges may comprise comparing color values and/or brightness values of adjacent pixels within the camera sensor data to identify the one or more edges. The determining of the information related to the one or more intensity discontinuities may comprise comparing intensity values and/or depth values of adjacent points within the point cloud of the lidar sensor data to identify the one or more intensity discontinuities (or depth continuities). The one or more edges may align with the one or more brightness discontinuities and/or the one or more color discontinuities within the combined image. For example, the determining 160 of the combined image may comprise reducing a mismatch of an overlay of the one or more edges within the camera sensor data and the one or more intensity discontinuities within the lidar sensor data, e.g. data over a plurality of frames within the camera sensor data and over a plurality of point clouds within the lidar sensor data. For example, the reducing of the mismatch may comprise transforming (e.g. shifting, rotating, translating and/or scaling) the lidar sensor data and/or the camera sensor data to improve an alignment of the one or more edges with the one or more intensity discontinuities. The reducing of the mismatch may comprise determining translation and rotation parameters to reduce the mismatch between the one or more edges within the camera sensor data and the one or more intensity discontinuities within the lidar sensor data. For example, the determining of the translation and rotation parameters may be based on an initial guess (e.g. based on a previously reduced mismatch between the one or more edges and the one or more intensity discontinuities) and a subsequent adjustment of the translation and rotation parameters. For example, the translation and rotation parameters may be gradually adjusted from the initial guess as long as the mismatch decreases. The calibration may match or project the camera sensor data and the lidar sensor data to a common coordinate system.

In various examples, the method may further comprise transforming a point cloud of the lidar sensor data based on the information related the one or more edges and based on the information related to the one or more intensity discontinuities. For example, the transforming of the point cloud may (substantially) align the one or more intensity discontinuities with the one or more edges within the common coordinate system. For example, the transforming of the point cloud may project the point cloud to the common coordinate system so that the one or more intensity discontinuities are substantially aligned with the one or more edges. The determining 160 of the combined image may be based on the transformed point cloud. Transforming the point cloud (e.g. scaling, shifting or translating the point cloud) may enable a mapping of distance/depth/intensity values to pixels of image frames of the camera sensor data.

In at least some examples, the determining 130 of the information related to the one or more edges within the camera sensor data and the information related to the one or more intensity discontinuities within the lidar sensor data may be based on a plurality of frames of the camera sensor data and based on a plurality of point clouds of the lidar sensor data. For example, the plurality of frames of the camera sensor data and the plurality of point clouds may be based on a changing scenery, e.g. while the vehicle is in motion. For example, the determining 130 of the information related the one or more edges and of the information related to the one or more intensity discontinuities may be performed while the vehicle is in motion, e.g. while the vehicle in motion and/or based on a changing scenery. This may enable a constant re-adjustment of the (extrinsic) calibration, and might render a factory-based extrinsic calibration obsolete. For example, the plurality of frames of the camera sensor data and the plurality of point clouds might not be based on a static scenery, e.g. might not be based on a calibration checkerboard. In various embodiments, the camera sensor data may comprise a plurality of frames. The determining 130 of the information related the one or more edges may comprise detecting the one or more edges over the plurality of frames. For example, the determining 130 of the information related to the one or more edges may increase a precision of the detection of the one or more edges of the plurality of frames. The determining 130 of the information related to the one or more edge may comprise tracking the one or more edges over the plurality of frames. The lidar sensor data may comprise a plurality of point clouds of the lidar sensor data. The determining 130 of the information related to the one or more intensity discontinuities may comprise detecting the one or more discontinuities over the plurality of point clouds. The determining 130 of the information related to the one or more edge may comprise tracking the one or more intensity discontinuities of the plurality of points clouds. This may enable a more precise alignment e.g. while the vehicle is in motion. The plurality of frames of the camera sensor data and the plurality of point clouds may be obtained from the camera and from the lidar sensor during a pre-defined timeframe. For example, the determining 130 of the information related to the one or more edges may be performed after the plurality of frames of the camera sensor data and the plurality of point clouds are recorded by the lidar sensor and by the camera. For example, the plurality of frames may comprise at least 5 (or at least 10, or at least 20, or at least 30) frames. The plurality of point clouds may comprise at least 5 (or at least 10, at least 20, at least 30) point clouds. For example, the determining 130 of the information related to the one or more edges within the camera sensor data and the information related to the one or more intensity discontinuities within the lidar sensor data may be performed while the vehicle is in motion. For example, the determining 160 of the combined image may comprise (gradually) reducing a mismatch of an overlay of the one or more edges over the plurality of (image) frames of the camera sensor data and the one or more intensity discontinuities of the plurality of point clouds within the lidar sensor data. For example, the overlay of the one or more edges over the plurality of (image) frames of the camera sensor data and the one or more intensity discontinuities of the plurality of point clouds within the lidar sensor data may be based on a multiplication overlay of edges and intensity discontinuities. Alternatively, the determining 130 of the information related to the one or more edges within the camera sensor data and the information related to the one or more intensity discontinuities within the lidar sensor data may be performed while the vehicle is standing (static).

In at least some embodiments, the method further comprises determining a calibration of the camera sensor data and of the lidar sensor data based on the information related to the one or more edges and based on the information related to the one or more intensity discontinuities. For example, the calibration may be an extrinsic calibration of the camera sensor data and of the lidar sensor data. The calibration may indicate at least one transformation parameter (e.g. first and second transformation parameters) for a projection or transformation of the lidar sensor data and/or of the camera sensor data onto the common coordinate system. The calibration may indicate at least one transformation parameter (e.g. first and second transformation parameters) for overlaying the lidar sensor data and the camera sensor data such that outlines of an object comprised within the lidar sensor data substantially match outlines of the object comprised within the camera sensor data. The determining 160 of the combined image may be based on the calibration of the camera sensor data and of the lidar sensor data. For example, the determining of the calibration may be based on reducing a mismatch of an overlay of the one or more edges within the camera sensor data and the one or more intensity discontinuities within the lidar sensor data, e.g. over a plurality of frames within the camera sensor data and a plurality of point clouds within the lidar sensor data. For example, the reducing of the mismatch may comprise determining translation and rotation parameters to reduce the mismatch between the one or more edges within the camera sensor data and the one or more intensity discontinuities within the lidar sensor data. The calibration may match the camera sensor data and the lidar sensor data to the common coordinate system.

In various embodiments, the determining of the calibration comprises determining first transformation parameters for transforming the camera sensor data from a camera coordinate system to the common coordinate system. The determining of the calibration may comprise determining second transformation parameters for transforming the lidar sensor data from a lidar coordinate system to the common coordinate system. For example, the first transformation parameters and/or the second transformation parameters may comprise at least one element of the group of cropping parameters, scaling parameters, shifting parameters and rotational parameters. The combined image may be based on the common coordinate system. For example, the determining 160 of the combined image may comprise transforming or projecting the camera sensor data to the common coordinate system based on the first transformation parameters. The determining 160 of the combined image may comprise transforming or projecting the lidar sensor data (e.g. one or more point clouds within the lidar sensor data) to the common coordinate system based on the second transformation parameters. The common coordinate system may enable a combined processing of the combined image, e.g. using a (convolutional) neural network.

In various embodiments, the determining of the calibration may be performed or triggered according to a pre-defined time-interval (e.g. every hour, every predetermined amount of hours, every day, every week), based on a power cycle of the vehicle 100 (e.g. every time the vehicle 100 is started) and/or based on a motion of the vehicle 100. As a calibration mismatch may occur while the vehicle is driving, such events may trigger a re-calibration. For example, the determining of the calibration may be triggered, if the motion of the vehicle violates a motion threshold, e.g. if the vehicle encounters a road bump or road conditions that are detrimental to a precision of the calibration.

For example, the determining 160 of the combined image may comprise determining a mapping between distance information within the lidar sensor data and color information (e.g. image information or pixel information) within the camera sensor data. For example, the determining 160 of the combined image may comprise determining distance information for each pixel of the color information within the camera sensor data or for each pixel of a cropped portion of the color information within the camera sensor data. The determining 160 of the combined image may comprise assigning a distance value, a depth value or an intensity value to pixels/points of the combined image, e.g. to each pixel/point of the combined image. This may enable the determination of the combined image. For example, the lidar sensor data may comprise a point cloud of distance information. The determining 160 of the combined image may comprise projecting points of the point cloud onto a camera plane of the camera sensor data. For example, the projecting of the point cloud onto the camera plane may comprise translating the points of the point cloud into a coordinate system of the camera sensor data or into a common coordinate system used for the combined image. The projection may enable a mapping of distance (or depth, intensity) values to pixels of image frames of the camera sensor data. For example, a distance value/depth/intensity value of a pixel/point of the combined image may indicate or approximate a distance of said pix-el/point from the vehicle 100 (e.g. from the lidar sensor). The combined image may comprise distance information (e.g. the distance value/depth/intensity value for the points/pixels of the combined image) and color information (e.g. three-channel color information for the pixels/points of the combined image). This may enable a combined processing of the combined image, e.g. using a (convolutional) neural network. The determining 160 of the combined image may comprise overlaying distance information of the lidar sensor data onto an image constructed from the camera sensor data.

In at least some embodiments, the combined image may be based on a common coordinate system, which may be different from a coordinate system of the color information (or pixel information/image information) and different from a coordinate system of the depth information. Alternatively, the common coordinate system may be the coordinate system of the color information (e.g. a camera coordinate system of the camera). The common coordinate system may be a two-dimensional coordinate system specifying a plurality of points arranged in a two-dimensional formation. For example, the determining 160 of the combined image may comprise determining distance information for each point of the plurality of points specified by the common coordinate system. For example, the determining 160 of the combined image may comprise mapping the camera sensor data (e.g. the color information within the camera sensor data) to the common coordinate system (e.g. to the plurality of points specified by the common coordinate system).

In at least some embodiments, the method may further comprise upsampling a resolution of distance information (e.g. distance values, depth values, intensity values) within the combined image to match a spatial resolution of color information within the combined image. The upsampling may improve a processing by the neural network. For example, the upsampling may comprise determining a distance value (or depth value, intensity value) for each pixel of the color information within the combined image. For example, the upsampling may comprise determining a distance value (depth value, intensity value) for each point within the common coordinate system (or for each point within a region of the common coordinate system, e.g. for each point within a region of the common coordinate system, for which both camera sensor data and lidar sensor data is available). For example, the upsampling may be based on a bilateral filtering of the lidar sensor data. For example, once the calibration parameters between the camera and Lidar co-ordinates are determined and before the projection onto a hybrid RGBD data (e.g. the determining 160 of the combined image) takes place from both domains with depth + camera values, the Lidar images may be upsampled using an (innovative) bilateral filtering, which other systems might not use within a process pipeline of fusion of data from multiple sensors.

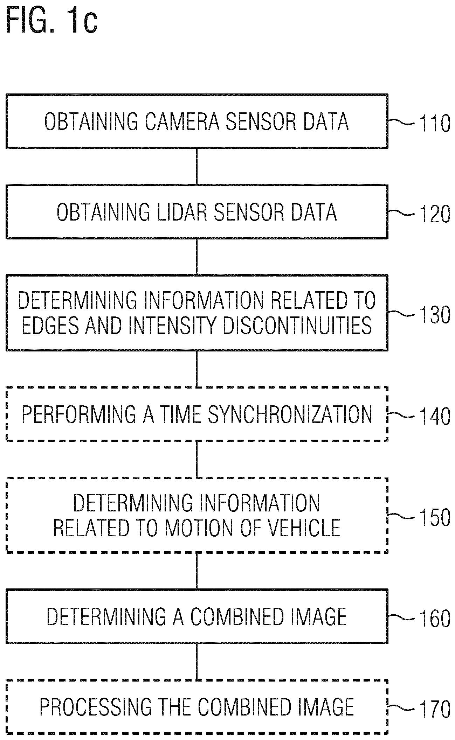

In various embodiments, as shown in Fig. 1c, the method further comprises performing 140 a time synchronization between the camera sensor data and the lidar sensor data. For example, the performing 140 of the time synchronization may comprise synchronizing an image capturing by the camera for the camera sensor data and a measuring of point clouds by the lidar sensor for the lidar sensor data. Alternatively or additionally, the performing 140 of the time synchronization may comprise determining a time offset between the lidar sensor data and the camera sensor data. For example, the performing of the time synchronization may bring a capture time of images captured by the camera for the camera sensor data into a pre-determined temporal relationship with a capture time of point clouds captured by the lidar sensor for the lidar sensor data. For example, the determining 160 of the combined image may be further based on the time synchronization between the camera sensor data and the lidar sensor data. The time synchronization may enable a better alignment of the camera sensor data and the lidar sensor data. For example, the method may further comprise triggering the camera to capture an image (frame) for the camera sensor data based on the time synchronization. For example, the method may further comprise triggering the lidar sensor to capture a point cloud for the lidar sensor data based on the time synchronization.

In at least some embodiments, the performing 140 of the time synchronization is triggered based on the lidar sensor. For example, the time synchronization may be based on a rotation of the lidar sensor, e.g. based on a frequency of the rotation, based on a time of the rotation and/or based on a rotation angle. For example, when the lidar sensor completes or commences a recording of a point cloud of one rotation of the lidar sensor, the camera sensor may be triggered. Alternatively, the camera sensor may be triggered based on a current rotation angle of the lidar sensor. The time synchronization may be based on a rotation angle of the lidar sensor. For example, a hardware sensor (e.g. an induction sensor (to sense a magnetic marking of the lidar sensor) or an optical sensor) may be configured to detect a pre-determined angle of the rotation of the lidar sensor (e.g. an encoder position) and to trigger the camera sensor based on the detected pre-determined angle. Alternatively, the rotation angle may be determined based on a rotation frequency and based on a pre-determined start time of the rotation of the lidar sensor. The rotation angle may be determined based on a time offset since the predetermined start time of the rotation and based on the rotation frequency. Using the lidar sensor, e.g. a rotation angle of the lidar sensor, as reference may enable a more precise alignment of the camera sensor data and the lidar sensor data as the triggering of an image capture using the camera sensor may more readily adjustable.

In at least some embodiments, the method may further comprise determining 150 information related to a motion of the vehicle 100. For example, the information related to the motion of the vehicle may comprise information related to a movement of the vehicle, e.g. related to at least one of a velocity of the vehicle, a steering angle of the vehicle, a movement of the vehicle along the road and a movement of the vehicle orthogonal to a direction of the road. The determining 160 of the combined image may be further based on the information related to the motion of the vehicle. This may enable accounting for a distance traveled by the vehicle during a rotation of the lidar sensor. For example, the determining 160 of the combined image may comprise compensating the motion of the vehicle for the combined image, e.g. based on the time synchronization between the camera sensor data and the lidar sensor data. For example, the method may further comprise compensating for the motion of the vehicle in the determination of the combined image. The resulting combined image may have a better alignment between the lidar sensor data and the camera sensor data. For example, the method may comprise transforming a point cloud within the lidar sensor data based on the information related to the motion, e.g. and based on a pre-determined time-offset between the lidar sensor data and the camera sensor data (as indicated by the time synchronization). The determining 160 of the combined image may be based on the transformed point cloud. The compensating for the motion may transform the point cloud such that the transformed point cloud indicates an estimated distance of objects in a vicinity of the vehicle at a specific point of time (as opposed to the period of time required by a rotation of a rotational lidar sensor), e.g. as if the lidar sensor had recorded the point cloud all at once at the specific point of time. The transforming of the point cloud may transpose at least a part of the point cloud to an estimated position of the part of the point cloud at a time a corresponding camera image of the camera sensor data is taken based on the information related to the motion, e.g. based on a pre-determined time-offset between the lidar sensor data and the camera sensor data (as indicated by the time synchronization). Transforming the point cloud may enable the determination of the distance/depth/intensity values of the point cloud at the point in time the camera sensor data was taken by the camera sensor.

In at least some embodiments, the method may further comprise processing 170 the combined image using an artificial neural network. The neural network may for example perform object recognition and/or identify regions of interest within the combined image. For example, the artificial neural network may be a pre-trained neural network. Alternatively, the artificial neural network may be at least partially trained based on the lidar sensor and/or based on the camera (e.g. based on the lidar sensor model and/or based on the camera sensor model). The artificial neural network may be configured to detect and/or classify at least one object within the combined image. For example, the artificial neural network may be configured to determine a bounding box for at least one classified object within the combined image. For example, the artificial neural network may be configured to detect one or more classes of objects within the combined image. The artificial neural network may be configured to detect at least one element of the group of other vehicles, pedestrians and traffic signs within the combined image. Alternatively or additionally, the artificial neural network may be configured to segment the combined image. For example, the artificial neural network may be configured to identify regions of interest within the combined image. The method may further comprise processing the regions of interest, e.g. using the artificial neural network, using another artificial neural network and/or using a processor. In various embodiments, the artificial neural network and/or the other artificial neural network may be implemented using a dedicated circuit, e.g. an application specific integrated circuit for implementing the artificial neural network. Alternatively, the artificial neural network may be implemented in software, e.g. executed by a processor of the processing module.

In at least some embodiments, the artificial neural network is a convolutional neural network. Convolutional neural networks may offer a number of advantages in the processing of image data. For example, the combined image may comprise the distance information in an image format for as input for the convolutional neural network. The artificial neural network may comprise a plurality of inputs. At least one of the plurality of inputs may be based on color information of the combined image. At least one of the plurality of inputs may be based on distance information (e.g. distance values, depth values or intensity values) of the combined image. For example, three inputs of the plurality of inputs may be based on the color information of the combined image (e.g. red, green and blue channels). Three inputs of the plurality of inputs may be based on the distance information of the combined image (e.g. converted into a three-channel image format. Processing both color information and depth, distance or intensity information of the combined image within the artificial neural network may improve a recognition or classification of objects and a segmentation of the combined image.

In various embodiments, the method may further comprise transforming distance information (e.g. depth/distance/intensity values) of the combined image into a three-channel image format. The processing 170 of the combined image may be based on the three-channel image format. For example, the three-channel image format may be based on a three-channel color map providing a linear conversion between distance values (or depth values, intensity values) and color values, e.g. a JET coloring or a coloring similar to JET coloring. The three-channel image format is based on one or more elements of the group of horizontal disparity, height above ground and angle with gravity (HHA). The three-channel image format may be analyzed using pre-trained convolutional neural networks.

The at least one interface 12 may correspond to one or more inputs and/or outputs for receiving and/or transmitting information, which may be in digital (bit) values according to a specified code, within a module, between modules or between modules of different entities. In embodiments the processing module 14 may be implemented using one or more processing units, one or more processing devices, any means for processing, such as a processor, a computer or a programmable hardware component being operable with accordingly adapted software. In other words, the described function of the processing module 14 may as well be implemented in software, which is then executed on one or more programmable hardware components. Such hardware components may comprise a general purpose processor, a Digital Signal Processor (DSP), a micro-controller, etc.

Some approaches for extrinsic calibration between multiple sensors may be (mainly) based on manually selected point correspondences in a point cloud and it's corresponding image. To find the corresponding image pair to a point cloud, timestamps may be also manually manipulated. This may be implemented using the Matlab LCCT Laser-Camera Calibration Toolbox) toolbox. Other approaches for automatic online calibration may get rid of manual correspondences but instead use an exhaustive grid search technique for the correct data fit on (only) static scenes. This means that the car might not be moving during the calibration process.

Some downsides may be that the calibration might not be performed on moving (dynamic) scenes. This means the calibration process might not take place while the car is driving. In case there is a shift in the physical location of the mounted sensors, the car might need to come to a stop, re-calibrate and then go on driving. Furthermore, such an approach may be very computationally intensive because it may rely on an exhaustive Grid search algorithm to find the best parameters for fitting multi sensor data together. Further, a good calibration may require a good initial starting point of the extrinsic calibration parameters. Along with it, the grid search step-size may be directly proportional to the accuracy obtained for the final parameter solution.

At least some embodiments may provide a process comprising (1.) automatic time syncing algorithms between point cloud and image pairs, which may result in being able to run this calibration in both dynamic and Static scenes. This may mean that if there is a shift in the sensor positions, the car (e.g. the vehicle 100) might automatically detect and adjust for it by generating new extrinsic calibration parameters. Further (2.), at least some embodiments might not be very computationally expensive, as no exhaustive grid search might be performed in some embodiments, said embodiments depending on optimization algorithms minimizing the error of the edge similarities in the scene (e.g. in the determining of the calibration and/or in the determination 130 of the information related to the one or more edges and of the information related to the one or more edges). Furthermore (3.), by running the optimization on multiple dynamic scenes while the car is driving, the error (of the edge similarities) function may be convex so that at least some embodiments may always land up with a robust calibration. Therefore, various embodiments might not need to run the grid search, which may be more time consuming and costlier than at least some embodiments.

The process according to at least some embodiments may provide better sensor fusion where the sensor pairs may be (much) more tightly aligned in both time and space giving rise to more meaningful data for machine learning (e.g. using an artificial neural network) purposes. For object detection, at least some embodiments may enhance the performance of machine learning algorithms, if a process according to some embodiments is added as a pre-processor.

Further, at least some embodiments may provide (very) less ringing/ ghost artifacts on the fused data, so a processing of the combined image may lead to less false positives or misclassifications.

At least some embodiments may provide sensor fusion and detection networks.

Sensor fusion may combine measurements from different sensors in a coherent way (e.g. using a sensor fusion pipeline). Specifically, sensor fusion may comprise assigning a distance value to each pixel of a camera image (e.g. determining the combined image).

At least some exemplary embodiments may be based on a lidar sensor (e.g. a Velodyne HDL64), a camera (e.g. an Axis webcam), a Grasshopper2 (a firewire camera) and a triggering rig. For example, the lidar sensor and the camera (or cameras) may be mounted onto a vehicle (e.g. using a metal framework), such that the camera (or cameras) may face the street ahead of the vehicle.

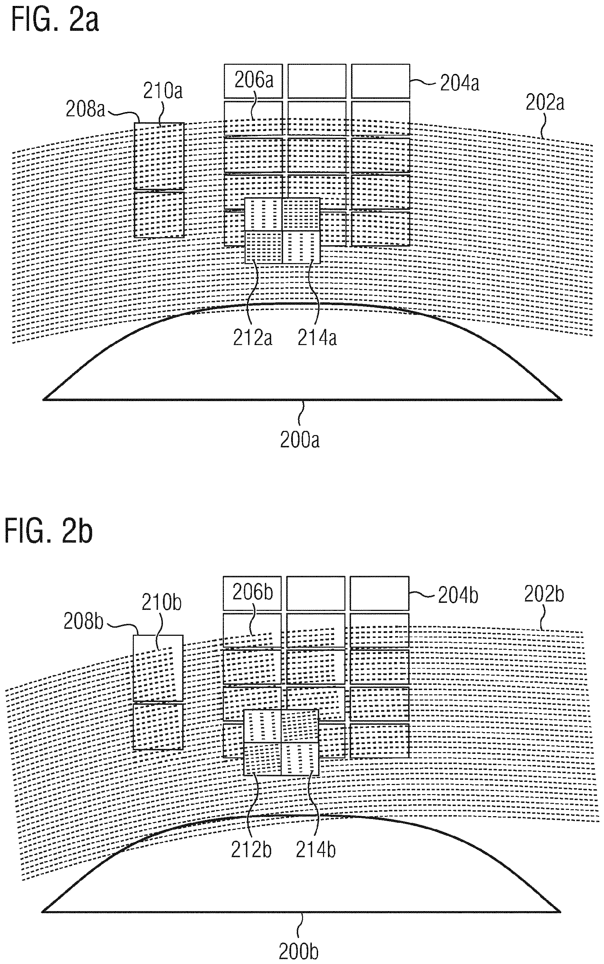

Fig. 2a and 2b show a schematic illustration of a sensor fusion. Fig. 2a shows a sensor fusion with a matching overlay of the camera sensor data and of the lidar sensor data. Figs. 2a and 2b show objects within a room represented by camera sensor data and overlaid within lidar sensor data (e.g. within a combined image). The distance information (e.g. intensity information) and the color information may cover different parts of the combined image. For example, the combined image may comprise distance information for a subset of pixels within the combined image. Fig. 2a shows a hood 200a of the vehicle (e.g. of the vehicle 100), intensity measurements 202a of the lidar sensor data, windows 204a of a room the vehicle is located in, corresponding intensity measurements 206a at a location of the windows 204a, a translucent door 208a and corresponding intensity measurements 210a and intensity measurements at a basic calibration checkerboard with four squares with dark squares 212a and bright squares 214a. Intensity measurements of the lidar sensor data corresponding to darker parts of the room (e.g. lower parts of the wall) may be lower than intensity measurements of the lidar sensor data corresponding to brighter parts of the room (e.g. the windows 204a or the door 208a), while intensity measurements of the lidar sensor data of the white squares 214a of the calibration checkerboard may be lower than intensity measurements of the lidar sensor data of the block squares 212a of the calibration checkerboard. In Fig. 2a, the lidar sensor data and the camera sensor data may be well-aligned (e.g. based on an (extrinsic calibration) of the lidar sensor data and the camera sensor data), while in Fig. 2b, the lidar sensor data and the camera sensor data may be mis-aligned, the lidar sensor data may be tilted to the left relative to the camera sensor data. Similar to Fig. 2a, Fig. 2b shows a hood 200b of the vehicle (e.g. of the vehicle 100), intensity measurements 202b of the lidar sensor data, windows 204b of a room the vehicle is located in, corresponding intensity measurements 206b at a location of the windows 204b, a translucent door 208b and corresponding intensity measurements 210b and intensity measurements at a basic calibration checkerboard with four squares with dark squares 212b and bright squares 214b. The lidar sensor data might not be aligned with the image representation of the room.

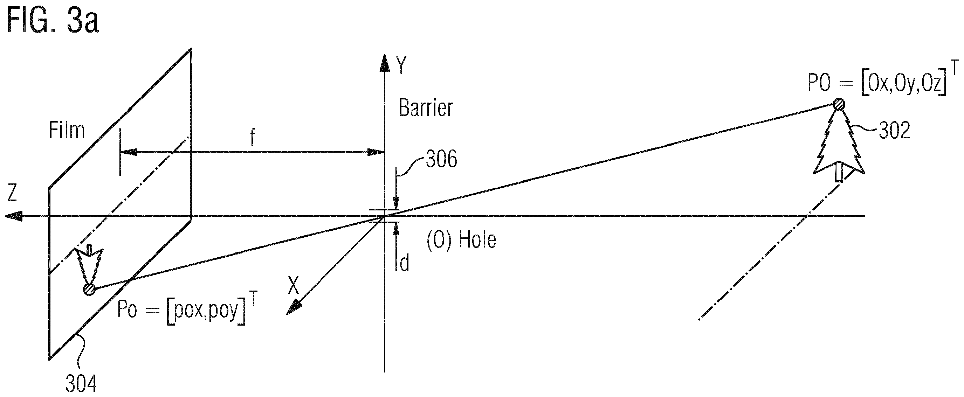

Fig. 3a shows a principle of camera calibration based on a pinhole camera model. Fig. 3a shows the object 302 captured by the camera, the representation 306 of the object at the camera sensor plane and pinhole 306. The pinhole camera model may be based on the focal length and a principal point. The camera calibration may comprise determining the mapping from points in the camera coordinate system to pixels in the camera image. In computer graphics, the world coordinate system (origin somewhere in the world) and camera coordinate system (origin at camera center) might not be the same. When calibrating the camera using a known object, e.g. using a calibration checkerboard, since the physical dimensions of the calibration objects may be known, the camera matrix and distortions may be calculated.

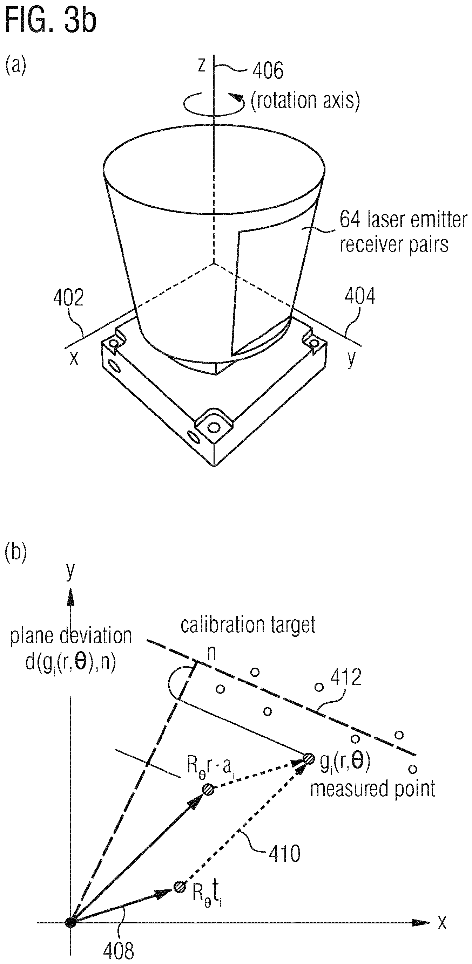

Fig. 3b shows a principle of a calibration of a lidar sensor. An exemplary lidar sensor, e.g. a Velodyne sensor, may comprise 64 lasers, each at a different vertical inclination. Measurements of the lidar sensor (e.g. the lidar sensor data) may comprise a distance value for each laser & encoder position of the rotating head. To obtain world coordinates, the physical orientation of the laser relative to the "head" of the lidar (sensor) may be determined. This may be given by the lidar sensor, e.g. by the Velodyne sensor.

The sensor data may comprise a dense 2D image (of the camera sensor data) and a sparse 3D point cloud (of the lidar sensor data). To combine the camera sensor data and the lidar sensor data, LiDAR points may be projected onto the camera plane. In LiDAR projection, it may be assumed that LiDAR and camera have the same coordinate system. The calibration may provide the mapping of (any) 3D point in the camera coordinate system to camera pixels. Based on the mapping, the LiDAR measurements may be drawn onto the image.

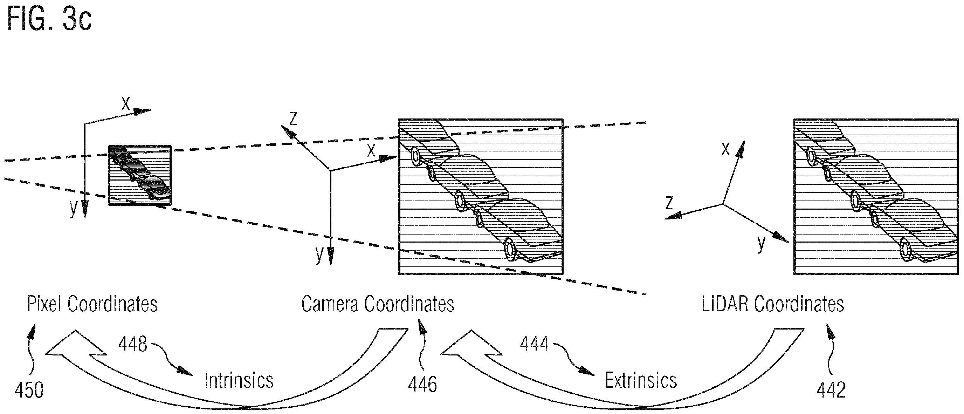

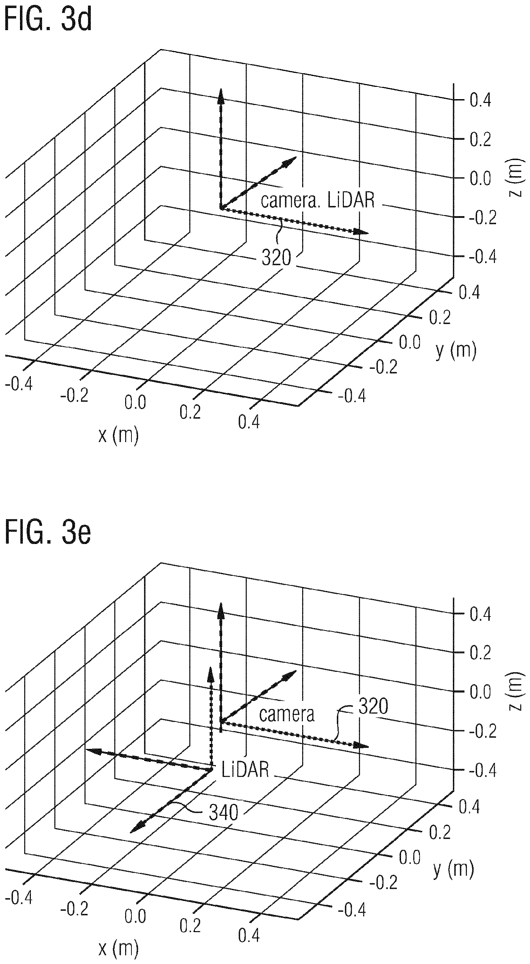

To combine the data (e.g. to obtain the combined image), the lidar sensor data may be mapped to the same coordinate system as the camera sensor data. Fig. 3c shows a basic principle according to at least some embodiments. The lidar coordinates 442 may be mapped through extrinsic calibration 444 to camera coordinates 446, and then mapped through intrinsic calibration 448 to pixel coordinates 450 (e.g. of the common coordinate system). Fig. 3d shows the coinciding coordinate frames 320 of the camera sensor data and the lidar sensor data. Fig. 3e shows the actual coordinate frames for the camera sensor data 330 and the LiDAR sensor data 340.

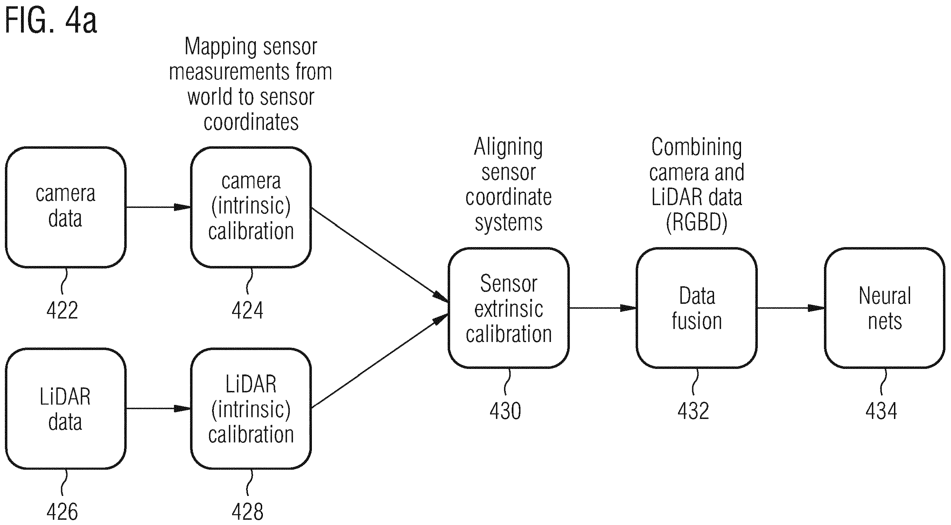

Fig. 4a shows a flow chart of a method for a combined processing of camera sensor data and lidar sensor data. In intrinsic calibration steps 424 (camera) and 428 (Lidar) for camera data 422 and lidar data 426, sensor measurements may be mapped from world to sensor coordinates. The method further comprises sensor extrinsic calibration 430 to align the sensor coordinate systems. The method further comprises data fusion 432, combining the camera and lidar data as RGBD (Red-Green-Blue-Depth) image (e.g. the combined image). This combined image may be processed using neural networks 434.

To perform the (extrinsic) calibration between the camera sensor data and the lidar sensor data, a metric may be defined to indicated how well aligned LiDAR and camera are. This metric may be based on the edges (e.g. the one or more edges within the camera sensor data) in the image (Inverse Distance Transformation edges, which may be used as a method to blur the edges extracted from the image, as it may be advantageous (to blur the edges) to assign a high matching score if the edges from the camera and the lidar data are well but not perfectly aligned) and the edges in point cloud (intensity discontinuities) (e.g. the one or more intensity discontinuities within the lidar sensor data. Within the extrinsic calibration, the edges may be aligned. A measure of similarity may be, how well the edges line up.

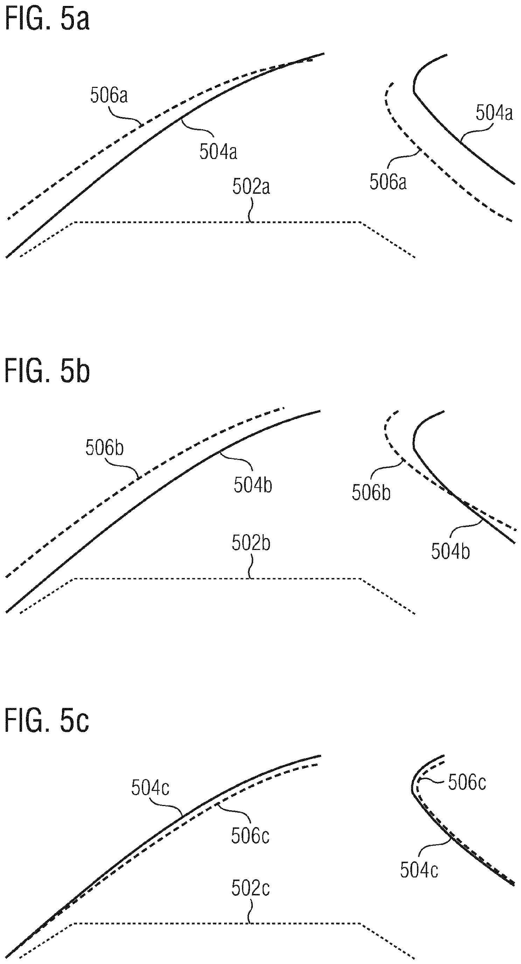

The extrinsic calibration may be determined over a plurality of frames. Figs. 5a-5c show a gradual improvement of the extrinsic calibration over a plurality of frames, e.g. example iterations of an algorithm aligning image edges and point cloud discontinuities. A vehicle 502a; 502b; 502c drives on a road 504a; 504b; 504c. The camera sensor data of the road 504a; 504b; 504c is overlaid with lidar sensor data 506a; 506b; 506c. Fig. 5a shows the extrinsic calibration after iteration 10 (after 10 frames of the plurality of frames), Fig. 5b shows the extrinsic calibration after iteration 35 and Fig. 5c shows the extrinsic calibration 50.

This can be either static or dynamic, it's flexible and it is automatic. Doesn't involve a target object like a checkerboard (like in all standard process) but from any random scenery in front of it (camera + lidar common scenery)

At least some embodiments may comprise further refinements. For example, time synchronization may be applied in dynamic scenes, which may reduce a time difference between measurements of camera & LiDAR pair. At least some embodiments may further comprise egomotion compensation, e.g. to account for the time required for a rotation of the LiDAR measurement time and the motion of the vehicle during that time.

Within the data fusion, depth information (e.g. the distance information) may be encoded in a way the detection network (e.g. the artificial neural network can understand it), e.g. using JET coloring or HHA features. For example, a first higher distance value may be encoded with a different color value (e.g. of the three-channel image format) into the combined image than a second lower distance value. E.g., in JET coloring, the first higher distance value (further away from the vehicle) may be encoded as a blue value in the three-channel image format, and the second lower distance value (closer to the vehicle) may be encoded as a red value, with the values in between ranging from blue over green, yellow and orange to red.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. Method for a vehicle (100), the method comprising:
obtaining (110) camera sensor data of a camera of the vehicle (100);
obtaining (120) lidar sensor data of a lidar sensor of the vehicle (100);
determining (130) information related to one or more edges within the camera sensor data and information related to one or more intensity discontinuities within the lidar sensor data; and
determining a calibration of the camera sensor data and of the lidar sensor data based on the information related to the one or more edges and based on the information related to the one or more intensity discontinuities, wherein the determining of the calibration is triggered while the vehicle is driving if the motion of the vehicle violates a motion threshold to trigger a re-calibration;
determining (160) a combined image of the camera sensor data and the lidar sensor data based on the information related the one or more edges and based on the information related to the one or more intensity discontinuities,
wherein the determining (160) of the combined image is based on the calibration of the camera sensor data and of the lidar sensor data.

2. The method according to claim 1, further comprising transforming a point cloud of the lidar sensor data based on the information related the one or more edges and based on the information related to the one or more intensity discontinuities, wherein the determining (160) of the combined image is based on the transformed point cloud.

3. The method according to one of previous claims, wherein the determining (130) of the information related to the one or more edges within the camera sensor data and the information related to the one or more intensity discontinuities within the lidar sensor data is based on a plurality of frames of the camera sensor data and based on a plurality of point clouds of the lidar sensor data.

4. The method according to one of the previous claims, wherein the determining of the calibration is based on reducing a mismatch of an overlay of the one or more edges within the camera sensor data and the one or more intensity discontinuities within the lidar sensor data over a plurality of frames within the camera sensor data and a plurality of point clouds within the lidar sensor data.

5. The method according to claim 4, wherein the reducing of the mismatch comprises determining translation and rotation parameters to reduce the mismatch between the one or more edges within the camera sensor data and the one or more intensity discontinuities within the lidar sensor data.

6. The method according to one of the previous claims, wherein the determining of the calibration comprises determining first transformation parameters for transforming the camera sensor data from a camera coordinate system to a common coordinate system and wherein the determining of the calibration comprises determining second transformation parameters for transforming the lidar sensor data from a lidar coordinate system to the common coordinate system, wherein the combined image is based on the common coordinate system.

7. The method according to one of the previous claims, wherein the determining of the calibration is performed according to a pre-defined time-interval, based on a power cycle of the vehicle (100) and/or based on a motion of the vehicle (100).

8. The method according to one of the previous claims, wherein the determining (130) of the information related the one or more edges and of the information related to the one or more intensity discontinuities is performed while the vehicle is in motion.

9. The method according to one of the previous claims, wherein the determining (160) of the combined image comprises assigning one of a distance value, a depth value and an intensity value to pixels of the combined image.

10. The method according to one of the previous claims, wherein the combined image comprises distance information and color information.

11. The method according to one of the previous claims, wherein the lidar sensor data comprises a point cloud of distance information, and wherein the determining (160) of the combined image comprises projecting points of the point cloud onto a camera plane of the camera sensor data.

12. An apparatus (10) for a vehicle (100), the apparatus (10) comprising:
at least one interface (12) configured to communicate with a camera of the vehicle (100) and to communicate with a lidar sensor of the vehicle (100); and
a processing module (14) configured to:
obtain camera sensor data of the camera,
obtain lidar sensor data of the lidar sensor,
determine information related to one or more edges within the camera sensor data and information related to one or more intensity discontinuities within the lidar sensor data,
determine a calibration of the camera sensor data and of the lidar sensor data based on the information related to the one or more edges and based on the information related to the one or more intensity discontinuities, wherein the determining of the calibration is triggered while the vehicle is driving if the motion of the vehicle violates a motion threshold to trigger a re-calibration, and
determine a combined image of the camera sensor data and the lidar sensor data based on the information related the one or more edges and based on the information related to the one or more intensity discontinuities,
wherein the determining of the combined image is based on the calibration of the camera sensor data and of the lidar sensor data.

13. A computer program having a program code for performing the method according to one of the previous claims, when the computer program is executed on an apparatus according to claim 12.

14. A vehicle (100) comprising an apparatus (10) according to claim 12.

## Patentansprüche

1. Verfahren für ein Fahrzeug (100), wobei das Verfahren umfasst:
Erhalten (110) von Kamerasensordaten einer Kamera des Fahrzeugs (100);
Erhalten (120) von Lidarsensordaten eines Lidarsensors des Fahrzeugs (100);
Bestimmen (130) von Informationen, die sich auf eine oder mehrere Kanten innerhalb der Kamerasensordaten beziehen, und von Informationen, die sich auf eine oder mehrere Intensitätsdiskontinuitäten innerhalb der Lidarsensordaten beziehen; und
Bestimmen einer Kalibrierung der Kamerasensordaten und der Lidarsensordaten basierend auf den Informationen, die sich auf die eine oder mehrere Kanten beziehen, und basierend auf den Informationen, die sich auf die eine oder mehrere Intensitätsdiskontinuitäten beziehen, wobei das Bestimmen der Kalibrierung ausgelöst wird, wenn die Bewegung des Fahrzeugs eine Bewegungsschwelle verletzt;
Bestimmen (160) eines kombinierten Bildes der Kamerasensordaten und der Lidarsensordaten basierend auf den Informationen, die sich auf die eine oder mehrere Kanten beziehen, und basierend auf den Informationen, die sich auf die eine oder mehrere Intensitätsdiskontinuitäten beziehen,
wobei das Bestimmen (160) des kombinierten Bildes auf der Kalibrierung der Kamerasensordaten und der Lidarsensordaten basiert.

2. Verfahren nach Anspruch 1, das ferner das Transformieren einer Punktwolke der Lidarsensordaten basierend auf den Informationen, die sich auf eine oder mehrere Kanten beziehen, und basierend auf den Informationen, die sich auf eine oder mehrere Intensitätsdiskontinuitäten beziehen, umfasst, wobei das Bestimmen (160) des kombinierten Bildes auf der transformierten Punktwolke basiert.

3. Verfahren nach einem der vorhergehenden Ansprüche, wobei das Bestimmen (130) der Informationen, die sich auf die eine oder mehrere Kanten innerhalb der Kamerasensordaten beziehen, und der Informationen, die sich auf die eine oder mehrere Intensitätsdiskontinuitäten innerhalb der Lidarsensordaten beziehen, auf mehreren Frames der Kamerasensordaten basieren und auf mehreren Punktwolken der Lidarsensordaten basieren.

4. Verfahren nach einem der vorhergehenden Ansprüche, wobei das Bestimmen der Kalibrierung auf dem Reduzieren einer Fehlanpassung einer Überlagerung der einen oder mehreren Kanten innerhalb der Kamerasensordaten und der einen oder mehreren Intensitätsdiskontinuitäten innerhalb der Lidarsensordaten über mehrere Frames innerhalb der Kamerasensordaten und mehrere Punktwolken innerhalb der Lidarsensordaten basiert.

5. Verfahren nach Anspruch 4, wobei das Reduzieren der Fehlanpassung das Bestimmen von Translations- und Rotationsparametern umfasst, um die Fehlanpassung zwischen der einen oder mehreren Kanten innerhalb der Kamerasensordaten und der einen oder den mehreren Intensitätsdiskontinuitäten innerhalb der Lidarsensordaten zu reduzieren.

6. Verfahren nach einem der vorhergehenden Ansprüche, wobei das Bestimmen der Kalibrierung das Bestimmen erster Transformationsparameter zum Transformieren der Kamerasensordaten von einem Kamerakoordinatensystem in ein gemeinsames Koordinatensystem umfasst und wobei das Bestimmen der Kalibrierung das Bestimmen zweiter Transformationsparameter zum Transformieren der Lidarsensordaten von einem Lidarkoordinatensystem in das gemeinsame Koordinatensystem umfasst, wobei das kombinierte Bild auf dem gemeinsamen Koordinatensystem basiert.

7. Verfahren nach einem der vorhergehenden Ansprüche, wobei das Bestimmen der Kalibrierung gemäß einem vordefinierten Zeitintervall, basierend auf einem Leistungszyklus des Fahrzeugs (100) und/oder basierend auf einer Bewegung des Fahrzeugs (100) durchgeführt wird.

8. Verfahren nach einem der vorhergehenden Ansprüche, wobei das Bestimmen (130) der Informationen, die sich auf eine oder mehreren Kanten beziehen, und der Informationen, die sich auf eine oder mehrere Intensitätsdiskontinuitäten beziehen, durchgeführt wird, während das Fahrzeug in Bewegung ist.

9. Verfahren nach einem der vorhergehenden Ansprüche, wobei das Bestimmen (160) des kombinierten Bildes das Zuweisen eines Entfernungswertes oder eines Tiefenwertes oder eines Intensitätswertes zu Pixeln des kombinierten Bildes umfasst.

10. Verfahren nach einem der vorhergehenden Ansprüche, wobei das kombinierte Bild Entfernungsinformationen und Farbinformationen umfasst.

11. Verfahren nach einem der vorhergehenden Ansprüche, wobei die Lidarsensordaten eine Punktwolke von Entfernungsinformationen umfassen, und wobei das Bestimmen (160) des kombinierten Bildes das Projizieren von Punkten der Punktwolke auf eine Kameraebene der Kamerasensordaten umfasst.

12. Computerprogramm mit einem Programmcode zum Durchführen des Verfahrens nach einem der vorhergehenden Ansprüche, wenn das Computerprogramm auf einem Computer, einem Prozessor oder einer programmierbaren Hardwarekomponente ausgeführt wird.

13. Vorrichtung (10) für ein Fahrzeug (100), wobei die Vorrichtung (10) umfasst:
mindestens eine Schnittstelle (12), die dazu ausgelegt ist, mit einer Kamera des Fahrzeugs (100) zu kommunizieren und mit einem Lidarsensor des Fahrzeugs (100) zu kommunizieren; und
ein Verarbeitungsmodul (14), das dazu ausgelegt ist:
Kamerasensordaten der Kamera zu erhalten,
Lidarsensordaten des Lidarsensors zu erhalten, Informationen, die sich auf eine oder mehrere Kanten innerhalb der Kamerasensordaten beziehen, und von Informationen, die sich auf eine oder mehrere Intensitätsdiskontinuitäten innerhalb der Lidarsensordaten beziehen, zu bestimmen,
eine Kalibrierung der Kamerasensordaten und der Lidarsensordaten basierend auf den Informationen, die sich auf die eine oder mehrere Kanten beziehen, und basierend auf den Informationen, die sich auf die eine oder mehrere Intensitätsdiskontinuitäten beziehen, zu bestimmen, wobei das Bestimmen der Kalibrierung ausgelöst wird, wenn die Bewegung des Fahrzeugs eine Bewegungsschwelle verletzt, und
ein kombiniertes Bild der Kamerasensordaten und der Lidarsensordaten basierend auf den Informationen, die sich auf eine oder mehrere Kanten beziehen, und basierend auf den Informationen, die sich auf eine oder mehrere Intensitätsdiskontinuitäten beziehen, zu bestimmen,
wobei das Bestimmen des kombinierten Bildes auf der Kalibrierung der Kamerasensordaten und der Lidarsensordaten basiert.

14. Fahrzeug (100), das eine Vorrichtung (10) nach Anspruch 13 umfasst.

## Revendications

1. Procédé pour un véhicule (100), ce procédé comprenant :
l'obtention (110) de données de capteur de caméra d'une caméra du véhicule (100) ;
l'obtention (120) de données de capteur LiDAR d'un capteur LiDAR du véhicule (100) ;
la détermination (130) d'informations liées à un ou plusieurs bords au sein des données de capteur de caméra et d'informations liées à une ou plusieurs discontinuités d'intensité au sein des données de capteur LiDAR ; et
la détermination d'un calibrage des données de capteur de caméra et des données de capteur LiDAR en se basant sur les informations liées au bord unique ou aux bords multiples et en se basant sur les informations liées à la ou aux discontinuités d'intensité, la détermination du calibrage étant déclenchée si le mouvement du véhicule viole un seuil de mouvement ;
la détermination (160) d'une image combinée des données de capteur de caméra et des données de capteur LiDAR en se basant sur les informations liées au bord unique ou aux bords multiples et en se basant sur les informations liées à la ou aux discontinuités d'intensité,
la détermination (160) de l'image combinée étant basée sur le calibrage des données de capteur de caméra et des données de capteur LiDAR.

2. Procédé selon la revendication 1, comprenant en outre la transformation d'un nuage de points des données de capteur LiDAR en se basant sur les informations liées au bord unique ou aux bords multiples et en se basant sur les informations liées à la ou aux discontinuités d'intensité, la détermination (160) de l'image combinée étant basée sur le nuage de points transformé.

3. Procédé selon une des revendications précédentes, dans lequel la détermination (130) des informations liées au bord unique ou aux bords multiples au sein des données de capteur de caméra et des informations liées à la ou aux discontinuités d'intensité au sein des données de capteur LiDAR est basée sur une pluralité de trames des données de capteur de caméra et basée sur une pluralité de nuages de points des données de capteur LiDAR.

4. Procédé selon une des revendications précédentes, dans lequel la détermination du calibrage est basée sur la réduction d'une discordance d'une superposition du bord unique ou des bords multiples au sein des données de capteur de caméra et de la ou des discontinuités d'intensité au sein des données de capteur LiDAR sur une pluralité de trames au sein des données de capteur de caméra et sur une pluralité de nuages de points au sein des données de capteur LiDAR.

5. Procédé selon la revendication 4, dans lequel la réduction de la discordance comprend la détermination de paramètres de translation et de rotation afin de réduire la discordance entre le ou les bords au sein des données de capteur de caméra et la ou les discontinuités d'intensité au sein des données de capteur LiDAR.

6. Procédé selon une des revendications précédentes, dans lequel la détermination du calibrage comprend la détermination de premiers paramètres de transformation pour transformer les données de capteur de caméra d'un système de coordonnées de caméra à un système de coordonnées commun et dans lequel la détermination du calibrage comprend la détermination de deuxièmes paramètres de transformation pour transformer les données de capteur LiDAR d'un système de coordonnées LiDAR au système de coordonnées commun, l'image combinée étant basée sur le système de coordonnées commun.

7. Procédé selon une des revendications précédentes, dans lequel la détermination du calibrage est exécutée conformément à un intervalle de temps prédéfini, en se basant sur un cycle d'énergie du véhicule (100) et/ou en se basant sur un mouvement du véhicule (100).

8. Procédé selon une des revendications précédentes, dans lequel la détermination (130) des informations liées au bord unique ou aux bords multiples et des informations liées à la ou aux discontinuités d'intensité est exécutée tandis que le véhicule est en mouvement.

9. Procédé selon une des revendications précédentes, dans lequel la détermination (160) de l'image combinée comprend l'attribution de soit une valeur de distance, soit une valeur de profondeur, soit une valeur d'intensité aux pixels de la page combinée.

10. Procédé selon une des revendications précédentes, dans lequel l'image combinée comprend des informations de distance et des informations de couleur.

11. Procédé selon une des revendications précédentes, dans lequel les données de capteur LiDAR comprennent un nuage de points d'informations de distance, et dans lequel la détermination (160) de l'image combinée comprend la projection de points du nuage de points sur un plan de caméra des données de capteur de caméra.

12. Programme informatique ayant un code de programme pour exécuter le procédé selon une des revendications précédentes, ce programme informatique étant exécuté sur un ordinateur, un processeur, ou un composant matériel programmable.

13. Appareil (10) pour un véhicule (100), cet appareil (10) comprenant :
au moins une interface (12) configurée de façon à communiquer avec une caméra du véhicule (100) et à communiquer avec un capteur LiDAR du véhicule (100) ; et
un module de traitement (14) configuré de façon à :
obtenir des données de capteur de caméra de la caméra,
obtenir des données de capteur LiDAR du capteur LiDAR,
déterminer des informations liées à un ou plusieurs bords au sein des données de capteur de caméra et des informations liées à une ou plusieurs discontinuités d'intensité au sein des données de capteur LiDAR, déterminer un calibrage des données de capteur de caméra et des données de capteur LiDAR en se basant sur les informations liées au bord unique ou aux bords multiples et en se basant sur les informations liées à la ou aux discontinuités d'intensité, la détermination du calibrage étant déclenchée si le mouvement du véhicule viole un seuil de mouvement, et à
déterminer une image combinée des données de capteur de caméra et des données de capteur LiDAR en se basant sur les informations liées au bord unique ou aux bords multiples et en se basant sur les informations liées à la ou aux discontinuités d'intensité,
la détermination de l'image combinée étant basée sur le calibrage des données de capteur de caméra et des données de capteur LiDAR.

14. Véhicule (100) comportant un appareil (10) selon la revendication 13.
